(19) Europäisches Patentamt
European Patent Office
Office européen des brevets

(11) EP 0 579 749 B2

(12) NEW EUROPEAN PATENT SPECIFICATION

(45) Date of publication and mention of the opposition decision:
**13.03.2002 Bulletin 2002/11**

(45) Mention of the grant of the patent:
**10.01.1996 Bulletin 1996/02**

(21) Application number: **92910588.0**

(22) Date of filing: **30.03.1992**

(51) Int Cl.7: **B01D 39/16**, B29C 67/24

(86) International application number:
**PCT/US92/02594**

(87) International publication number:
**WO 92/18224 (29.10.1992 Gazette 1992/27)**

# (54) FIBER SPINNING PROCESS AND PRODUCT THEREOF

Faserspinnverfahren und dessen Produkt

PROCEDE DE FILAGE DE FIBRES ET PRODUIT AINSI OBTENU

(84) Designated Contracting States:
**AT BE CH DE DK ES FR GB GR IT LI LU NL SE**

(30) Priority: **12.04.1991 US 684585**

(43) Date of publication of application:
**26.01.1994 Bulletin 1994/04**

(73) Proprietor: **MINNTECH CORPORATION**
**Minneapolis, MN 55447 (US)**

(72) Inventors:
- **WENTHOLD, Randal, M.**
  **Belle Plaine, MN 56011 (US)**
- **REGGIN, Robert, F.**
  **Watertown, MN 55388 (US)**
- **HALL, Robert, T., II**
  **Welch, MN 55089 (US)**
- **PIGOTT, Daniel, T.**
  **Minnetonka, MN 55343 (US)**
- **COSENTINO, Louis, C.**
  **Plymouth, MN 55447 (US)**

(74) Representative: **Davies, Jonathan Mark et al**
**Reddie & Grose**
**16 Theobalds Road**
**London WC1X 8PL (GB)**

(56) References cited:
**EP-A- 0 098 392**
**NL-A- 8 702 924**
**US-A- 4 051 300**
**US-A- 4 906 375**

EP 0 579 749 B2

## Description

### Field of the Invention

The invention relates to an improved process for the production of asymmetrical microporous hollow fibers. The process involves passing a polymeric solution through an outer annulus of die to create an annular stream and a precipitating fluid through the inner orifice of the die creating a stream within the annular stream resulting in hollow fiber formation.

### Background of the Invention

A microporous, hollow fiber is a polymeric capillary tube having an outside diameter of less than or equal to 1 mm, and whose wall functions as a semipermeable membrane. The fibers are useful in separation processes involving transport mainly through sorption and diffusion. Such processes include dialysis, including hemodialysis, ultrafiltration, hemofiltration, blood separation and water filtration. These applications have various requirements including pore sizes, strength, biocompatibility, cost and speed of production and reproducibility.

Early hollow fibers for these uses included regenerated cellulose material and modified polyacrylonitrile material. However, it is difficult to control the porosity and pore size of these fibers, and for some applications, composite membranes consisting of an ultra-thin layer contiguous with a more porous substrate are needed to provide the necessary strength.

In an attempt to overcome the difficulties and limitations of the prior art, Klein et al., U.S. Patent No. 4,051,300 discloses a process for the preparation of hollow microporous fibers capable of withstanding from 28 kPa to 97 kPa applied pressure without collapse. The fibers are prepared by a solution spinning process. This process comprises extruding a polymer solution of a first fiber forming polymer and a second, hydrophilic polymer through the outer annulus of a coextrusion die, providing a precipitating liquid miscible with the polymer solvent through an inner or center orifice in the coextrusion die. The precipitating liquid forms an inner liquid core surrounded by the polymer solution. The precipitation liquid causes the annular polymer solution to precipitate into a hollow fiber. In further processing, the fiber is washed free of the residual solvents and nonsolvents.

The polymer solution generally comprises about 15-65 combined weight percent of a first, fiber forming polymer and a second polymer. Fiber forming polymers disclosed include polysulfone and polyaromatic polyamide polymers. Polymers disclosed for use as the second polymer are polyvinylpyrrolidone polymers. The solvent for the polymer solution disclosed in the examples of the patent is dimethylacetamide (DMA) and dimethylformamide (DMF). Precipitating liquid disclosed in Klein include water/DMA, air and water/isopropyl alcohol. This process is a relatively slow, time consuming step wherein, fiber is produced at a rate of about 20 m/min.

The limitations on speed of hollow fiber production, in processes similar to Klein are reinforced in the teachings of Joh et al., U.S. Patent No. 4,342,711. This patent is drawn to a process for forming hollow fibers. An object of the invention is to allow the rapid manufacture of these fibers. However, Joh discloses that manufacturing process which allow the rapid diffusion of the core liquid or precipitating solution into the fiber-forming outer solution are limited to low process speeds, e.g., about 5-15 m/min.

This limitation is borne out in another patent drawn to a method for making fibers for hemodialysis, Heilmann, U.S. Patent No. 4,906,375. This patent discloses a process comprising wet spinning a polymer solution made up of a solvent, about 12 to 20 wt-% of a first, hydrophobic polymer and 2-10 wt-% of a hydrophilic polyvinylpyrrolidone polymer and simultaneously passing through a hollow internal core a precipitant solution comprising an aprotic solvent in conjunction with at least 25 wt-% non-solvent. Hydrophobic polymers disclosed include polysulfones such as a polyether sulfone, polycarbonates, and polyamides. The polar aprotic solvents disclosed include dimethylformamide (DMF), dimethylsulfoxide (DMSO), dimethylacetamide (DMA), n-methylpyrrolidone and mixtures thereof. The precipitating liquor is in the form of the aprotic solvent in conjunction with a certain amount of non-solvent, usually water. While this patent does not disclose a rate of production of the hollow fiber, we have found that, in accordance with the predictions of Joh et al., the Heilmann process can only be run at about 15-20 meters per minute.

The relatively slow rate at which these hollow fibers may be produced results in costly microporous hollow fibers. Therefore, a process to produce comparable microporous hollow fibers is needed which process can significantly reduce the manufacture time.

### Summary of the Invention

We have achieved a quantum jump in production rates by a sophisticated combination of process steps. The improved processing conditions result in a uniform creation of a liquid annular solution of polymer surrounding the precipitating liquid core that rapidly and uniformly solidifies into a microporous hollow fiber. Production rates can be

significantly increased without failure of the hollow fiber membrane.

Brief Description of the Drawings

Figure 1 is a schematic drawing of the invention.
Figure 2 is a detail of the dry-jet wet spinning spinneret.
Figure 3 is a detail of the orifices of the spinneret.

Detailed Description of the Drawings

The process of the invention may be generally determined in view of the drawings. A polymeric dope solution 12 comprising a polysulfone polymer and a polyvinyl pyrrolidone polymer dissolved in an aprotic solvent is prepared in a mixing vessel 14. The solution is then filtered in a filter press 16 and delivered by means of a pump 18 to a dry-jet wet spinning spinneret apparatus 20. This apparatus is discussed in further detail below.

Simultaneously, a diluent or precipitating solution 22 is prepared in a second mixing vessel 24 from water and a lower alcohol. This diluent solution is also delivered to the spinneret apparatus 20 by means of pump 26. The dope solution 12 and diluent solution 22 are spun from the spinneret apparatus 20 to form a hollow fiber 28. The hollow fiber 28 drops through a volume of gaseous fluid 30 which is enclosed within a pipe 32 until the fiber reaches the surface of a quenching bath 34. Water is circulated through the quenching bath 34 in an overflow manner, i.e., a continuous flow of water 36 is supplied to the quenching bath 34, and the excess fluid overflows and is removed, e.g., at 38. The fiber 28 is then directed out of the quenching bath 34 and is wound on a take-up wheel 40 which is immersed in a second, rinsing bath 42. Again, a continuous flow of water 44 is supplied to the rinsing bath 42, and the excess fluid overflows the bath and is removed, e.g., at 46.

The hollow fiber 28 thus produced may then be removed from the take-up wheel 40 and further processed. An example of further processing includes cutting the fibers 28 to a uniform length, bundling them and drying them in any conventional manner.

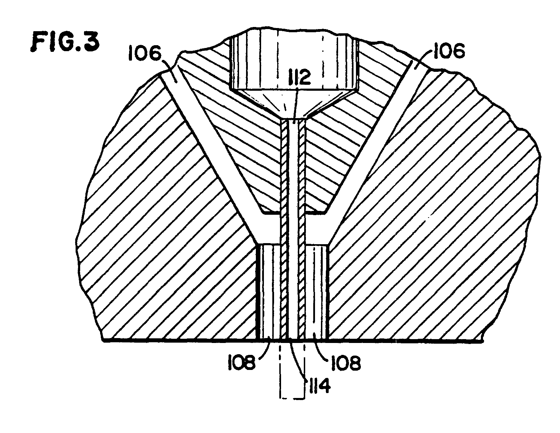

A detail of a spinneret head 102 which is a part of the dry-jet wet spinning spinneret apparatus 20 is illustrated in Figures 2 and 3. The dope solution 12 enters through a dope port 104, is directed to an annular channel 106, and flows out of an annular orifice 108 in a generally downward direction. The diluent solution 22 enters the spinneret head 102 through a diluent port 110, is directed through an inner channel 112 and flows out through a tubular orifice 114 which is in a generally concentric orientation with respect to the annular orifice 108.

Detailed Description of the Preferred Embodiment

The invention is directed to a spinning process for forming microporous, hollow fibers from a polymeric solution comprising a fiber-forming polysulfone polymer, a polyvinyl pyrrolidone polymer and an aprotic solvent. The fiber forming polysulfone polymer is preferably a polyarylene sulfone. More preferably, the polysulfone polymer is a polysulfone polymer having the formula:

(I) 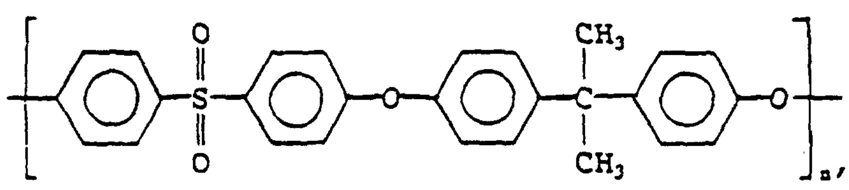

available from Amoco Chemicals Corp. under the UDEL mark, a polyether sulfone having the formula:

(II) 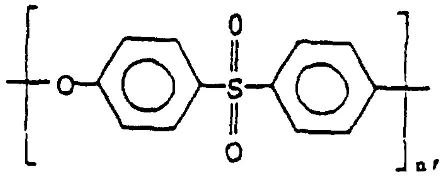

available from ICI America, Inc. under the VICTREX mark, a polyaryl sulfone, available from Amoco Chemicals Corp. under the RADEL mark. or a mixture thereof. Most preferably, the polysulfone polymer is a polysulfone of formula (I).

The polysulfone polymers preferably have a molecular weight of about 20,000 to 100,000. More preferably, the molecular weight is about 55,000 to 65,000, and most preferably, the molecular weight is about 60,000 to 65,000. If the molecular weight of the polymer is greater than about 100,000, the viscosity of the polymeric solution may become too great for processing. On the other hand, if the molecular weight of the polysulfone polymer is less than about 20,000, the viscosity of the polymeric solution may become too low to produce a fiber and any fiber formed may be too weak for processing. The polyvinyl pyrrolidone polymer (PVP) generally consists of recurring units of the formula:

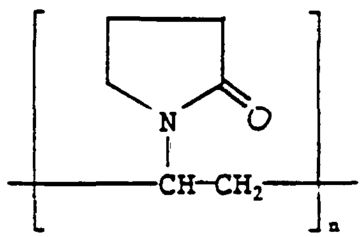

One characteristic of PVP has been called its "K-value" as defined by Fikentscher. The K-value of PVP may be calculated with the aid of the following equations:

$$\log z = c\left(\frac{75\,k^2}{1 + 1.5\,kc} + k\right) \qquad (1),$$

or

$$\text{K-value} = \frac{\sqrt{300\,c\log z + (c + 1.5\,c\log z)^2} + 1.5\,c\log z - c}{0.15\,c + 0.003\,c^2} \qquad (2)$$

where z is the relative viscosity of the solution of concentration c, k is the K-value x $10^{-3}$, and c is the concentration in % (w/v). The K-value of PVP is, therefore, a useful measure of the polymeric composition's viscosity. PVP with a K-value of about 80 to 95 is preferred in the practice of the invention. More preferably, the PVP has a K-value of about 85 to 90, and most preferably, the K-value is about 87. If the K-value of the PVP is greater than about 95, the solution may be too viscous for processing, and the pores may be too tight or small for use in hemodialysis. On the other hand, if the K-value of the PVP is less than about 80, open voids may form in the fiber wall. The PVP is useful to increase the solution viscosity of the polysulfone spinning dope. Further, this polymer is water soluble and the majority of the polymer may be dissolved from the formed fiber to increase its porosity. As some of the PVP may remain in the fiber, the fiber's wettability by an aqueous media is increased.

Finally, the polymeric solution comprises an aprotic solvent. An aprotic solvent is a solvent which is not proton-releasing under processing conditions, i.e., having non-acidic or non-ionizable hydrogen atoms. Preferably, this solvent is also soluble in water. A representative, non-limiting list of aprotic solvents useful in the invention includes dimethylformamide (DMF), dimethylsulfoxide (DMSO), dimethylacetamide (DMA), n-methylpyrrolidone and mixtures thereof. Preferably, the solvent is DMA. Depending on the desired property of the hollow fiber, a small amount of another solvent may be added instead of using a pure aprotic solvent. Preferably the additional solvent is a lower alcohol. This may enhance the precipitation of the polymer in the fiber formation.

Preferably, about 11-25 wt-%, more preferably, about 14-16 wt-%, and most preferably, about 15 wt-% of the fiber forming polysulfone polymer are dissolved in the aprotic dimethylacetamide solvent. When less than about 11 wt-% of the polysulfone polymer is used, the fibers formed are not strong enough to withstand the stresses involved in the high speed process of our invention. On the other hand, when the level of polysulfone polymer exceeds about 25 wt-%, a fiber having inferior hydraulic properties is produced.

The PVP is preferably dissolved in the solvent at a rate of about 0.1-5 wt-%, more preferably, about 2-4 wt-%, and most preferably, about 3 wt-%. When the PVP is included in the dope solution above about 5 wt-%, the resulting fibers are stiff and difficult to manufacture into dialysis cartridges. A similar result is seen when the amount of PVP is less than about 0.1 wt-%.

The polymeric solution has a viscosity of about 700-2300, preferably about 1400-1700, and most preferably, about 1500 cP at 25°C, as measured on a Brookfield viscometer. The solution is preferably filtered to remove any entrained particles (contaminants or undissolved components) to prevent apparatus blockage.

The polymeric solution is spun from the outer, annular orifice of a tube-in-orifice spinneret. A precipitating solution is delivered to the tube of the spinneret. The precipitating solution comprises a lower alcohol and water and may further comprise an aprotic solvent. To some extent, the composition of the precipitating solution affects the porosity, clearance and flux properties of the fiber. The composition of the precipitating solution effective to produce a hollow fiber membrane for use in hemodialysis is illustrated below in Table I.

Table I

| | Preferred | More Preferred | Most Preferred |
|---|---|---|---|
| Lower alcohol | 30-90 wt-% | 65-90 wt-% | 75-85 wt-% |
| Water | 10-35 wt-% | 10-35 wt-% | 10-35 wt-% |

In another preferred embodiment, a precipitating solution effective to produce a hollow fiber membrane for use in a hemofilter operation may comprise the components illustrated in Table II.

Table II

| | Preferred | Preferred | Preferred |
|---|---|---|---|
| Lower alcohol | 30-90 wt-% | 50-80 wt-% | 60-70 wt-% |
| Water | 10-35 wt-% | 10-30 wt-% | 15-25 wt-% |
| Aprotic solv. | 0-50 wt-% | 5-35 wt-% | 10-20 wt-% |

In yet another preferred embodiment, a precipitating solution effective to produce a hollow fiber membrane for use in a blood filter to separate red blood cells from higher molecular weight materials may comprise the components illustrated in Table III.

Table III

| | Preferred | Preferred | Preferred |
|---|---|---|---|
| Lower alcohol | 30-90 wt-% | 30-60 wt-% | 35-45 wt-% |
| Water | 10-35 wt-% | 10-30 wt-% | 15-25 wt-% |
| Aprotic solv. | 0-50 wt-% | 20-50 wt-% | 35-45 wt-% |

Representative, non-limiting examples of lower alcohols include methanol, ethanol, n-propanol, iso-propanol, n-butanol, t-butyl alcohol, isobutyl alcohol or a mixture thereof. Preferably, the alcohol comprises methanol, ethanol, n-propanol, isopropanol, n-butanol or a mixture thereof. More preferably, the alcohol comprises isopropanol.

The water which may be used in the precipitating liquid may be tap water, deionized water or water which is a product of reverse osmosis. Preferably the water is deionized water which has first been treated by reverse osmosis.

The aprotic solvent used in the precipitating solution may again be dimethylformamide (DMF), dimethylsulfoxide (DMSO), dimethylacetamide (DMA), n-methylpyrrolidone and mixtures thereof. Preferably, the aprotic solvent is the same as that used in the polymeric fiber forming solution. More preferably, the aprotic solvent comprises DMA.

The proportions of the alcohol, water and aprotic solvent which make up the precipitating solution influence the morphology, clearance, permeability, selectivity etc. of the hollow fiber membrane. In particular, the absence of an aprotic solvent in the precipitating solution may result in lower poor size and lower flux in the resulting fiber. It is generally preferred that the proportion of water in the precipitating solution remain relatively low, about 10 to 35 wt-%, to ensure

proper fiber results less than about 10 wt-% of water may result in too slow of a precipitation of the polymers to form a fiber, and a concentration of water greater than about 35 wt-% may result in a decrease in flux and pore size.

As indicated above, the polymeric dope is pumped and filtered and directed to the outer, ring orifice of a tube in orifice spinneret. At the same time, the precipitating liquid is pumped to the inner coaxial tube of the spinneret. These two solutions are then delivered from the spinneret in a manner such that the polymer dope forms an annular sheath surrounding a flow of precipitating liquid within the annulus. Preferably, the spinneret head is maintained at a temperature of about 5-85°C, more preferably, about 15-25°C, and most preferably, about 18°C. The polymeric dope is subjected to a pressure of about 0-1400 kPa, more preferably, about 140-1000 kPa, and most preferably, about 350-850 kPa. In a preferred embodiment, the polymer dope is spun through a ring orifice having an outside diameter of about 0.018 inches (about 460 microns) and an inside diameter of about 0.008 inches (about 200 microns).

At the same time, precipitating liquid is pumped through the tube of the spinneret at a pressure of about 0-1000 kPa, preferably about 0-100 kPa, and most preferably, about 1-20 kPa. In a preferred embodiment, the precipitating liquid or diluent solution is delivered through a tube having an inside diameter of about 0.004 inches (about 100 microns).

In a preferred embodiment, in order to produce a hollow fiber having a 280 micron outside diameter and 200 micron inside diameter, the polymer dope is delivered to the spinneret at a rate of at least about 0.1 mUmin, more preferably, about 2-10 mL/min, most preferably, about 3 mUmin, and the precipitating liquid is delivered at a rate of at least about 0.1 mUmin, more preferably, about 2-10 mUmin, and most preferably, about 3 mUmin. The spinneret is oriented in a manner such that fiber production is driven by fluid flow and by removal from the spinneret by gravity effects. Preferably, the fiber emerges from the spinneret and is pulled by gravity in a nearly vertical direction downwards.

In order to provide satisfactory fibers in the practice of the invention, laminar fluid flow should be maintained both within the spinneret head and the spun fluids which interact to precipitate the fiber. If turbulent flow is present in the spinneret head, especially within the channels which convey the polymeric dope, gas pockets may develop and ultimately form large voids in the spun fiber. Turbulent flow within the spun fluids may also result in voids within the fiber. It may be helpful to describe the relative flow rates of the polymeric dope to the diluent solution. Preferably, the volumetric flow ratio of dope to diluent is from about 0.1:1 to about 10:1, more preferably, the ratio is about 0.25:1 to 4:1, and most preferably, the ratio of the polymeric dope to diluent flow rate is about 0.7:1 to 1.5:1.

It is helpful to visualize the spinneret dimensions by resort to ratios of the annular orifice for passage of the polymeric dope and the coaxial tubular orifice for passage of the diluent or precipitating solution. One helpful ratio is the ratio of the cross-sectional area of the annular orifice to tubular orifice. Preferably, the ratio is greater than about 5:1, more preferably, the ratio is about 10:1 to 25:1, and most preferably, the ratio of the annular orifice to tubular orifice cross-sectional area is about 16:1. Another helpful dimensional ratio is the annular ring thickness to tube inside diameter. Preferably, the ratio is greater than about 0.5:1, more preferably, the ratio is about 0.75:1 to 5:1, and most preferably, the ratio of the annular ring thickness to tube inside diameter is about 1:1 to 2:1. A third helpful dimensional ratio is the outside diameter of the annular orifice to tube inside diameter. Preferably, this ratio is greater than about 2: 1, more preferably, the ratio is about 3:1 to 15:1, and most preferably, the ratio of the annular outside diameter to tube inside diameter is about 4:1 to 5:1.

As the fiber emerges from the spinneret, it travels in a substantially downward vertical direction over a distance of about 0.1-10 m, more preferably, about 1-3 m, and most preferably, about 1.5m. This allows the precipitating liquid to substantially precipitate the polymer in the annular dope solution forming the solid fiber capillary before it is immersed in a quenching solution. Between the spinneret and the quenching bath, the fiber can travel through the atmosphere, air, an augmented atmosphere i.e., a mixture of air and a gas, an inert gas, or a mixture thereof. Preferably, for ease in processing, and to produce a high quality fiber, the fiber travels through air with a relative humidity of about 40-50%. This gaseous atmosphere may be relatively stagnant, or there can be fluid flow. Preferably, the flow rate is sufficient to allow complete air change over in the spinning environment once every 30 minutes. In one preferred embodiment the gas flow is about 10 L/min.

Next, the fiber is submerged in a tank comprising water and 0-10 wt-% other materials. Again, the water may be tap, deionized water, or the produce of a reverse osmosis process. The temperature of the quenching bath is preferably between about 0 to 100°C, more preferably, about 15°C-45°C, and most preferably, about 35°C. The water temperature can affect the performance of the fiber. Lower temperatures can reduce the flux of the resulting fiber. Increasing the quenching bath temperature can increase the flux of the fiber. However, the temperature of the quenching bath does not seem to greatly affect solute clearance rates.

The fiber is preferably immersed in this quenching bath for a period of about 0.1-10 minutes, preferably about 0.1-5 minutes, and most preferably, about 1 minute. This residence time substantially permits the full precipitation of the polysulfone polymer to form the microporous hollow fiber. This quenching bath also helps to remove the excess, unprecipitated polymers as well as some of the PVP, the water soluble solvent and precipitating liquid.

After the quenching bath, the fiber may further be rinsed to further remove unprecipitated polymers and solvents. This rinsing may be accomplished in a one stage or multiple stage bath arrangement. Preferably, the rinsing is

achieved in a two stage bath having a water temperature of about 0°C-100°C in the first stage, more preferably, about 15°C-45°C, and most preferably, about 35°C and a temperature of about 0°C-100°C, more preferably, about 15°C-45°C, and most preferably, about 35°C in a second stage. The fiber is then wound up on a take up reel. This take up reel is preferably rotating at a speed such that the fiber is being wound at about 90-150 percent of the rate at which it is being formed at the spinneret. More preferably, the fiber is being wound at a rate substantially equal to that at which it is being produced, i.e., there is no draft.

The hollow fibers may then be dried, texturized, cut to a desired length, or further processed to form useful articles including hemodialyzer, hemofilters, blood filters, water filters, etc, having performance levels at least equivalent to currently available hollow fiber membranes.

For example, at a 200 mL/min flow rate, a clearance rate of at least about 130 mL/min is possible for both urea and creatinine and at least about 80 mL/min for Vitamin $B_{12}$. The flux rate possible with the fibers of the present invention is up to about 50 mL x $10^{-5}$/min/$cm^2$/mmHg, preferably about 10 to 25 mL x $10^{-5}$/min/$cm^2$/mmHg. The percent rejection for BSA is preferably less than about 5, more preferably, about 2-3%.

## Examples

The following specific examples which contain the best mode can be used to further illustrate the invention. These examples are merely illustrative of the invention and do not limit its scope.

### Example 1

A polymeric dope solution was formed by dissolving 16.2 wt-% of a polysulfone polymer having a molecular weight of about 55,000 to 60,000 (UDEL P 1800 available from Amoco) and 4 8 wt-% polyvinyl pyrrolidone polymer (PVP) having a K-value of about 85-88 in dimethylacetamide (DMA). The material was filtered and then pumped to a tube-in-orifice spinneret at a rate of 3.1 mL/min and a temperature of about 35°C.

Simultaneously, a diluent solution consisting of 70.5 wt-% isopropanol and 29.5 wt-% reverse osmosis, deionized (r.o.,d.i.) water was mixed, filtered and delivered to the spinneret at a temperature of about 20°C and a rate of about 3 mL/min.

The polymeric dope solution was delivered through the outer, annular orifice of the spinneret having an outside dimension of about 0.018 inches (about 460 microns) and an inside dimension of about 0.008 inches (about 200 microns). The diluent was delivered through a tube orifice within the annular orifice having an inside diameter of about 0.004 inches (about 100 microns). The spinneret head was maintained at about 19°C by means of a water bath. The spinneret discharged the column of dope solution and diluent downward through a six-inch diameter LEXAN pipe enclosing a volume of nitrogen (circulating at about 10 L/min) for a distance of about 1.5 m into a quenching water bath. The quenching bath was maintained at about 45°C, and about 5.5 L/min of reverse osmosis (r.o.) water was pumped into the tank with resulting water overflow. The fibers were then wound on a take-up wheel immersed in a second reverse osmosis water bath maintained at about 45°C, and about 6.8 L/min of r.o. water was pumped into the bath with resulting water overflow. The take-up rate was about 85 m/min. Simultaneously, the wheel was subjected to a water spray at about 65°C.

The fiber was then removed from the take-up wheel, cut and formed into bundles of about 9025 fibers about 25 cm long. These bundles were then immersed in a soaking water bath maintained at about 55°C for about 10 hours. Water (r.o.) was circulated in an overflow manner at a rate of about 1 L/min. Afterward, the fiber bundles were dried and tested.

### Example 2

The above procedure was repeated using the dope and diluent solutions of Example 1. The spinneret conditions of Example 1 were also repeated, but the fibers were spun into the ambient atmosphere (not a nitrogen atmosphere).

The quenching bath was maintained at about 110°F (about 43°C) and was fed with about 2.3 L/min r.o. water. The second bath was maintained at about 40°C and was fed with about 5.5 L/min r.o. water. The water spray was maintained at about 35°C, and the take-up rate was about 90 m/min

The resulting fiber bundles were soaked for about 1 hour at about 55°C at a water flow rate of about 1 L/min and were thereafter dried.

### Example 3

The above procedure was repeated using a dope solution comprising about 13.1 wt-% of the polysulfone of

Example 1 and about 2.8 wt-% of PVP having a K-value of about 85-88 in DMA and a diluent solution comprising about 87 wt-% isopropyl alcohol and about 13 wt-% r.o.,d.i. water. The resulting dope solution had a viscosity of about 750 cP at 25°C. The dope solution was supplied to the spinneret at room temperature and a rate of about 0.89 mL/min, and the diluent solution was supplied at a rate of about 0.85 mL/min at room temperature. The spinneret head was maintained at about 21 °C. The fiber was spun into the ambient atmosphere. The quenching bath was maintained at about 90°F (about 32°C) and was fed with about 7.6 L/min r.o. water. The second bath was maintained at about 90°F (about 32°C) and was fed with about 2 L/min r.o. water. The water spray was maintained at about 25°C, and the take-up rate was about 30 m/min

The resulting fiber bundles were soaked for about 6 hours at about 55°C at a water flow rate of about 1 L/min and were thereafter dried and tested. The fiber bundles exhibited good solute clearance and flux.

Example 4

The procedure of Example 1 was repeated using a dope solution comprising about 15.1 wt-% of the polysulfone of Example 1 and about 2.8 wt-% of PVP having a K-value of about 85-88 in DMA and a diluent solution comprising about 70.5 wt-% isopropyl alcohol and about 29.5 wt-% ro.,d.i. water. The resulting dope solution had a viscosity of about 1220 cP at 25°C. The dope solution was supplied to the spinneret at about 23°C and a rate of about 3.1 mL/min and the diluent solution was supplied at a rate of about 3 mL/min at room temperature. The spinneret head was maintained at about 24°C. The fiber was spun into the ambient atmosphere.

The quenching bath was maintained at about 90°F (about 32°C) and was fed with about 7.6 L/min r.o. water. The second bath was maintained at about 30°C and was fed with about 2 L/min r.o. water. The water spray was maintained at about 20°C. and the take-up rate was about 75 m/min.

The resulting fiber bundles were soaked for about 5 hours at about 55°C at a water flow rate of about 1 L/min and were thereafter dried and tested. The fiber bundles exhibited good solute clearance, flux and strength.

Example 5

The procedure of Example 1 was repeated using a dope solution comprising about 14.1 wt-% of the polysulfone of Example 1 and about 2.8 wt-% of PVP having a K-value of about 85-88 in DMA and a diluent solution comprising about 87 wt-% isopropyl alcohol and about 13 wt-% r.o.,d.i. water. The resulting dope solution had a viscosity of about 890 cP at 25°C. The dope solution was supplied to the spinneret at about 20°C and a rate of about 0.89 mL/min, and the diluent solution was supplied at a rate of about 0.85 mL/min at about 20°C. The spinneret head was maintained about 23°C. The fiber was spun into the ambient atmosphere.

The quenchinn bath was maintained at about 32°C and was fed with about 8 L/min r.o. water. The second bath was maintained at about 32°C and was fed with about 2 L/min r.o. water. The water spray was maintained at about 25°C, and the take-up rate was about 300 m/min.

The resulting fiber bundles were soaked at about 55°C at a water flow rate of about 2 L/min and were thereafter dried and tested. The fiber bundles exhibited good solute clearance and flux.

Example 6

The procedure of Example 1 was repeated using a dope solution comprising about 15.1 wt-% of a polysulfone polymer having a molecular weight of about 60,000 to 65,000 (UDEL P1835 from Amoco) and about 2.8 wt-% of PVP having a K-value of about 85-88 in DMA and a diluent solution comprising about 80 wt-% isopropyl alcohol and about 20 wt-% r.o.,d.i. water. The resulting dope solution had a viscosity of about 1520 cP at 25°C. The dope solution was supplied to the spinneret at about 37°C and a rate of about 3.55 mL/min, and the diluent solution was supplied at a rate of about 2.5 mL/min. The spinneret head was maintained at about 26°C. The fiber was spun into the ambient atmosphere.

The quenching bath was maintained at about 35°C and was fed with about 4 L/min r.o. water. The second bath was maintained at about 35°C and was fed with about 2 L/min r.o. water. The water spray was maintained at about 25°C. and the take-up rate was about 80 m/min.

The resulting fiber bundles were soaked for about 8 hours at about 55°C at a water flow rate of about 1 L/min and were thereafter dried and tested. The fiber bundles exhibited good solute clearance, flux and strength.

Example 7

The procedure of Example 1 was repeated using a dope solution comprising about 16.1 wt-% of the polysulfone of Example 1 and about 4.8 wt-% of PVP having a K-value of about 85-88 in DMA and a diluent solution comprising

about 70.5 wt-% isopropyl alcohol and about 29.5 wt-% r.o.,d.i. water. The resulting dope solution had a viscosity of about 3500 cP at 25°C. The dope solution was supplied to the spinneret at about 37°C and a rate of about 1.3 mL/min, and the diluent solution was supplied at a rate of about 1.3 mL/min at about 20°C. The spinneret head was maintained at about 23°C. The fiber was spun into the ambient atmosphere.

The quenching bath was maintained at about 30°C and was fed with about 6 L/min r.o. water. The second bath was maintained at about 30°C and was fed with about 4 L/min r.o. water. The water spray was maintained at about 20°C, and the take-up rate was about 40 m/min.

The resulting fiber bundles were soaked for about 6 hours at about 55°C at a water flow rate of about 2 L/min and were thereafter dried and tested. The fiber bundles exhibited good solute clearance, flux and strength.

Example 8

The procedure of Example 1 is repeated using a dope solution comprising about 15.1% of UDEL 1835 and 2.8 wt-% PVP having a K-value of about 85-88 in DMA and a diluent solution comprising about 79 wt-% isopropyl alcohol and about 21 wt-% r.o.,d.i. water. The dope solution is supplied to the spinneret at about 37°C and a rate of about 3.55 mL/min, and the diluent solution is supplied at a rate of about 2.5 mL/min at about 20°C. The fiber is spun into the ambient atmosphere.

The quenching bath is maintained at about 35°C and is fed with about 4 L/min r.o. water. The second bath is maintained at about 35°C and is fed with about 9 L/min r.o. water. There is no water spray present.

The resulting fiber bundles are soaked in water at about 55°C and are thereafter dried and tested. The fiber bundles exhibit good solute clearance, flux and strength.

Example 9

The procedure of Example 1 was repeated using a dope solution comprising about 16.1 wt-% of the polysulfone of Example 1 and about 2.8 wt-% of PVP having a K-value of about 85-88 in DMA and a diluent solution comprising about 70.5 wt-% isopropyl alcohol and about 29.5 wt-% water. The resulting dope solution had a viscosity of about 1540 cP at 25°C. The dope solution was supplied to the spinneret at about 20°C and a rate of about 3.1 mL/min, and the diluent solution was supplied at a rate of about 3 mL/min at about 20°C. The spinneret head was maintained at about 25°C. The fiber was spun into the ambient atmosphere.

The quenching bath was maintained at about 30°C and was fed with about 4 L/min r.o. water. The second bath was maintained at about 30°C and was fed with about 6 L/min r.o. water. The water spray was maintained at about 25°C, and the take-up rate was about 85 m/min.

The resulting fiber bundles were soaked for about 5 hours at about 55°C at a water flow rate of about 2 L/min and were thereafter dried and tested. The fiber bundles exhibited good solute clearance, flux and strength.

Example 10

The procedure of Example 1 was repeated using a dope solution comprising about 16.1 wt-% of the polysulfone of Example 1, about 4.8 wt-% of PVP having a K-value of about 85-88, about 2 wt-% of ethanol and the balance of DMA and a diluent solution comprising about 70.5 wt-% isopropyl alcohol and about 29.5 wt-% water. The resulting dope solution had a viscosity of about 2770 cP at 25°C. The dope solution was supplied to the spinneret at about 37°C nd a rate of about 3.1 mL/min, and the diluent solution was supplied at a rate of about 3 mUmin at room temperature. The spinneret head was maintained at about 24°C. The fiber was spun into the ambient atmosphere.

The quenching bath was maintained at about 37°C and was fed with about 4 L/min r.o. water. The second bath was maintained at about 37°C and was fed with about 2 L/min r.o. water. The water spray was maintained at about 45°C, and the take-up rate was about 80 m/min.

Example 11

The procedure of Example 1 was repeated using a dope solution comprising about 15.1 wt-% of a polysulfone polymer having a molecular weight of about 60,000 to 65,000 (UDEL P1835 from Amoco) and about 2.8 wt-% of PVP having a K-value of about 85-88 in DMA and a diluent solution comprising about 81 wt-% isopropyl alcohol and about 19 wt-% r.o.,d.i. water. The dope solution was supplied to the spinneret at about 34°C and a rate of about 3.55 mL/min, and the diluent solution was supplied at a rate of about 2.5 mL/min. The spinneret head was maintained at about 19°C. The fiber was spun into the ambient atmosphere.

The quenching bath was maintained at about 17°C and was fed with about 6 L/min r.o. water. The second bath was maintained at about 35°C and was fed with about 2 L/min r.o. water. There was no water spray, and the take-up rate was about 80 m/min.

The resulting fiber bundles were soaked in water at about 55°C, and were thereafter dried and tested. The fiber bundles exhibited good solute clearance, moderate flux and good strength.

Example 12

The procedure of Example 1 was repeated using a dope solution comprising about 15.1 wt-% of a polysulfone polymer having a molecular weight of about 60,000 to 65,000 (UDEL P1835 from Amoco) and about 2.8 wt-% of PVP having a K-value of about 85-88 in DMA and a diluent solution comprising about 82 wt-% isopropyl alcohol and about 18 wt-% r.o.,d.i. water. The dope solution was supplied to the spinneret at about 34°C and a rate of about 3.55 mL/min, and the diluent solution was supplied at a rate of about 2.5 mL/min. The spinneret head was maintained at about 20°C. The fiber was spun into the ambient atmosphere.

The quenching bath was maintained at about 16°C and was fed with about 6 L/min r.o. water. The second bath was maintained at about 36°C and was fed with about 2 L/min r.o. water. There was no water spray, and the take-up rate was about 80 m/min.

The resulting fiber bundles were soaked in water at about 55°C and were thereafter dried and tested. The fiber bundles exhibited good solute clearance, moderate flux and good strength.

Fibers from Examples 6, 11 and 12 were evaluated for water flux and compared. The results are shown below in Table IV.

TABLE IV

| Example | Flux* |
|---|---|
| 6 | 18-26 |
| 11 | 11 |
| 12 | 9 |

*(mL x $10^{-5}$/min/$cm^2$/mmHg)

Example 13

Following the general procedure of Example 1, a polymeric dope comprising 17.2 wt-% of the polysulfone of Example 1, 2.8 wt-% PVP K90 and 80 wt-% dimethylacetamide was spun with an isopropyl alcohol/water diluent solution. Fibers were spun under the conditions indicated in Table V. From the data of Table V, it can be seen that increasing moisture in the spinning atmosphere decreases the flux of the resulting fiber and decreases the pore size of the fiber.

TABLE V

| EFFECT OF ENCLOSURE AND ENCLOSURE CONDITIONS AROUND FIBER DROP AREA ON FIBER PERFORMANCE | | |
|---|---|---|
| | Flux* | % Rejection BSA |
| No Enclosure | 87.9 | 1.0 |
| Enclosure (dry $N_2$ at 10 Lpm) | 69.2 | 3.7 |
| Enclosure (No Air Flow) | 57.9 | 1.0 |
| Enclosure (Water Sat. Air at 10 Lpm) | 44.6 | 7.7 |

*Solution of BSA in water (mL x $10^{-5}$/min/$cm^2$/mmHg)

Example 14

The basic procedure of Example 1 was repeated using a polymeric solution comprising 7.1 wt-% of the polysulfone of Example 1, 2.8 wt-% PVP K90, 75.8 wt-% dimethylacetamide, 8.4 wt-% dimethylformamide, and 1.9 wt-% water. This dope was spun with diluent formulations as indicated in Table VI. From the data in Table VI, it can be seen that the use of an aprotic solvent increases the flux of the resulting fiber and that using a major proportion of water also increases the flux of the resulting fiber.

TABLE VI

| EFFECT OF DIFFERENT ORGANICS IN THE DILUENT ON POLYSULFONE/PVP FIBER PERFORMANCE | | | | | | |
|---|---|---|---|---|---|---|
| Diluent Formulation | | | | Flux * | % Rejection | |
| Material | % | Material | % | | BSA | Myoglobin |
| Water | 75 | Methanol | 25 | 3.8 | 100 | 88 |
| Water | 50 | Methanol | 50 | 1.8 | 100 | 96 |
| Water | 25 | Methanol | 75 | Unit Not Tested | | |
| Water | 75 | N-Methyl Pyrrolidone | 25 | 5.5 | 98 | 69 |
| Water | 50 | N-Methyl Pyrrolidone | 50 | 2.0. | 100 | 96 |
| Water | 25 | N-Methyl Pyrrolidone | 75 | Could Not Spin Fiber | | |

*(mL x $10^{-5}$/min/$cm^2$/mmHg)

Example 15

The general procedure of Example 1 was repeated using a polymer dope comprising about 11.1 wt-% of the polysulfone of Example 1, about 2.8 wt-% PVP K90, about 77.5 wt-% dimethylacetamide, and about 8.6 wt-% dimethylformamide and an isopropyl alcohol/water diluent solution. These compositions were spun having the drop heights shown in Table VII. The data in Table VII indicates that there is little change in fiber performance with the variation in fiber drop height.

TABLE VII

| EFFECT OF DROP HEIGHT (FREE FALL FIBER DROP) ON FIBER SIZE AND PERFORMANCE | | | | |
|---|---|---|---|---|
| Drop Height | I.D*. | Flux ** | % Rejection | |
| | | | BSA | Myoglobin |
| 89 cm (35") | 212 | 52.8 | 57.2 | 18.8 |
| 114 cm (45") | 216 | 49.5 | 60.5 | 8.1 |

*Inside diameter of resulting fiber (microns)
**(mL x $10^{-5}$/min/$cm^2$/mmHg)

Example 16

The general procedure of Example 1 was again repeated with a polymeric dope consisting of about 13.6 wt-% of the polysulfone of Example 1, about 3.4 wt-% PVP K90, about 1 wt-% water and about 82 wt-% dimethylacetamide. Diluent solutions have the formulations shown in Table VIII were spun with this dope composition. The data in Table VIII indicates that in diluent solutions comprising a major proportion of alcohol, decreasing water concentrations increase the flux of the resulting fibers.

TABLE VIII

| RELATIONSHIP OF ISOPROPANOL IN THE DILUENT (WATER/ISOPROPYL MIX) ON POLYSULFONE/PVP FIBER PERFORMANCE | | |
|---|---|---|
| | Flux* | % Rejection BSA |
| 85% IPA | 121 | 70 |
| 70% IPA | 23 | 95.7 |
| 60% IPA | 10 | 98.2 |

*Solution of BSA in water (ml x $10^{-5}$/min/$cm^2$/mmHg)

The foregoing description, examples and data are only illustrative of the invention described herein, and they should not be used to limit the scope of the invention or the claims. Since many embodiments and variations can be made while remaining within the scope of the invention, the invention resides wholly in the claims herein after appended.

**Claims**

1. An improved process for the manufacture of asymmetrical, microporous, hollow fibers, the process comprising:

(a) passing, through an outer annular orifice of a tube-in-orifice spinneret, a polymeric solution comprising about 11 to 25 wt-% of a hydrophobic, polysulfone polymer and about 0.1 to 5 wt-% of a polyvinylpyrrolidone polymer dissolved in an aprotic solvent and having a viscosity of about 700 to 3500cP to form an annular liquid wherein the tube-in-orifice spinneret has an inner tube, said inner tube and said outer annular orifice each having a cross-sectional area such that the ratio of the respective cross-sectional areas of the outer annular orifice to the inner tube is about 5:1 or greater;
(b) simultaneously passing in laminar fluid flow, through the inner tube of the tube-in-orifice spinneret, into the center of the annular liquid a precipitating solution comprising:

(i) about 30 to 90 wt-% of an alcohol having from one to five carbon atoms:
(ii) about 10 to 35 wt-% of water; and
(iii) about 0 to 50 wt-% of an aprotic solvent;

(c) passing in laminar fluid flow the annular liquid and the precipitating solution in the center of the annular liquid through a vertical drop of from 0.1 to 10 meters in an atmosphere or an augmented atmosphere comprising a mixture of air and a gas, an inert gas, and mixtures thereof, wherein the precipitating solution interacts with the polymeric solution within the annular liquid to form an annular polymer precipitate;
(d) quenching the polymer precipitate in a bath to form a hollow fiber, wherein the spinneret and the quenching bath are separated by a vertical distance of from 0.1 to 10 meters; and
(e) taking up the fiber at a rate of about 90 to 150% of the rate at which it is formed, the fiber being produced at a rate of at least 30 m/min.

2. The process of claim 1 wherein the polysulfone comprises a polymer of the formula:

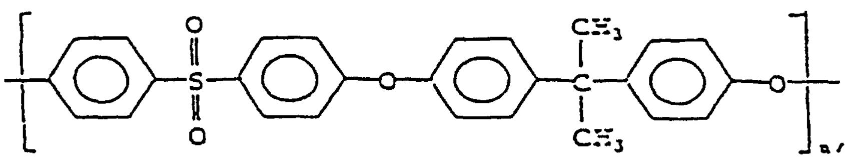

3. The process of claim 1 wherein the polysulfone is selected from the group which comprises polyethersulfone and polyarylsulphone.

4. The process of claim 1 wherein the polyvinylpyrrolidone polymer has a K-value of about 80 to 93.

5. The process of claim 1 wherein the aprotic solvent is selected from the group which comprises dimethylformamide, dimethylacetamide, dimethylsulfoxide, N-methylpyrrolidone or a mixture thereof.

6. The process of claim 1 wherein the lower alcohol is selected from the group which comprises methanol, ethanol propanol, isopropanol or a mixture thereof.

7. The process of claim 1 wherein the quenching bath is maintained at about 15 to 45°C.

8. The process of claim 1 wherein the augmented atmosphere comprises humidified air, nitrogen, argon or a mixture thereof.

9. The process of claim 8 comprising circulating the augmented atmosphere.

10. The process of claim 8 wherein the humidified air comprises air with a relative humidity of about 20 to 100%.

11. The process of claim 1 wherein the spinneret and quenching bath are separated by from 0.1 to 10 meters, and preferably from about 1 to 3 m.

**12.** The process of claim 1 which further comprises washing the hollow fiber after quenching.

**13.** The process of claim 1 wherein the polymeric solution is delivered to the spinneret at a rate of at least about 0.1 mL/min and a temperature of about 5 to 85°C.

**14.** The process of claim 1 wherein the precipitating solution is delivered to the spinneret at a rate of at least about 0.1 mL/min and a temperature of about -10 to 85°C.

**15.** The process of claim 1 wherein the outer annular orifice of the spinneret has an outside diameter of about 0.015 to 0.045 inches (0.381 to 1.14 millimetres) and an inside diameter of about 0.005 to 0.010 inches (0.127 to 0.254 millimetres).

**16.** The process of claim 1 wherein the tube of the spinneret has an inside diameter of about 0.001 to 0.010 inches (0.0254 to 0.254 millimetres).

**17.** A process for manufacture of asymmetrical, microporous, hollow fibers according to claim 1 wherein said process produces fibers capable of withstanding take up rates of about 75 m/min or greater.

**18.** A process according to claim 18 wherein the asymmetrical, microporous, hollow fibers comprise a mixture of polysulfone and polyvinyl pyrrolidone.

**19.** The process of claim 19 wherein the polysulfone comprises a polymer of the formula:

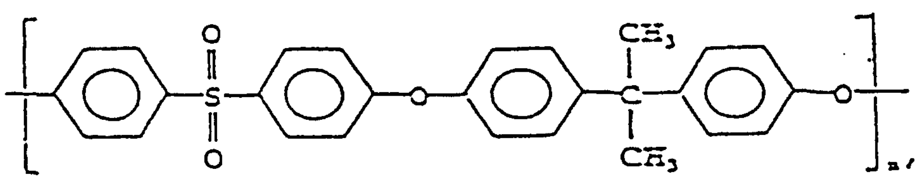

**20.** The process of claim 19 wherein the polysulfone is selected from the group which comprises polyethersulfone and polyarylsulphone.

**Patentansprüche**

**1.** Verbessertes Verfahren zur Herstellung von asymmetrischen, mikroporösen, hohlen Fasern, wobei man bei dem Verfahren

(a) durch eine äußere ringförmige Austrittsöffnung einer Spinndüse, die ein um ein Innenrohr angeordnetes Mundstück aufweist, eine Polymerisatlösung hindurchtreten läßt, die etwa 11 bis 25 Gew.-% eines hydrophoben Polysulfons und etwa 0,1 bis 5 Gew.-% eines Polyvinylpyrrolidons in eimem aprotischen Lösungsmittel gelöst enthält und eine Viskosität von etwa 700 bis 3500 cP aufweist, so daß eine ringförmige Flüssigkeit gebildet wird, wobei das Verhältnis des Querschnittes der äußeren ringförmigen Austrittsöffnung zu dem Querschnitt des Innenrohrs bei etwa 5:1 oder darüber liegt;
(b) gleichzeitig in laminarer Flüssigkeitsströmung durch das Innenrohr der Spinndüse in die Mitte der ringförmigen Flüssigkeit eine ausfällende Lösung hindurchtreten läßt, die

(i) etwa 30 bis 90 Gew.-% eines Alkohols mit 1 bis 5 Kohlenstoffatomen;
(ii) etwa 10 bis 35 Gew.-% Wasser und
(iii) etwa 0 bis 50 Gew.-% eines aprotischen Lösungsmittels enthält;

(c) die ringförmige Flüssigkeit und die ausfällende Lösung in der Mitte der ringförmigen Flüssigkeit in laminarer Flüssigkeitsströmung über eine vertikale Distanz von 0,1 bis 10 m in einer Atmosphäre oder einer angereicherten Atmosphäre aus einem Gemisch aus Luft und einem Gas, einem Inertgas oder einem Gemisch daraus fallen läßt, wobei die Ausfällungslösung mit der als ringförmige Flüssigkeit auftretenden Polymerisatlösung in Wechselwirkung tritt, wobei eine ringförmige Polymerisat-Ausfällung gebildet wird;

(d) das ausgefällte Polymerisat in einem Bad unter Ausbildung einer Hohlfaser abschreckt, wobei die Spinndüse und das Abschreckungsbad durch eine vertikale Entfernung von 0,1 bis 10 m getrennt sind; und
(e) die Faser mit einer Geschwindigkeit von etwa 90 bis 150% der Geschwindigkeit, mit der sie gebildet wird, abzieht, wobei die Faser mit einer Geschwindigkeit von mindestens 30 m/ min hergestellt wird.

**2.** Verfahren gemäß Anspruch 1, wobei das Polysulfon ein Polymerisat der Formel

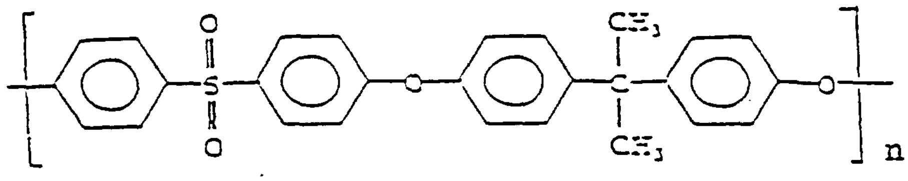

darstellt.

**3.** Verfahren gemäß Anspruch 1, wobei das Polysulfon aus der Gruppe der Polyethersulfone und Polyarylsulfone ausgewählt ist.

**4.** Verfahren gemäß Anspruch 1, wobei das Polyvinylpyrrolidon einen K-Wert von etwa 80 bis 93 aufweist.

**5.** Verfahren gemäß Anspruch 1, worin das aprotische Lösungsmittel aus der Gruppe Dimelthylformamid, Dimethylacetamid, Dimethylsulfoxid, N-methylpyrrolidon oder einem Gemisch daraus ausgewählt ist.

**6.** Verfahren gemäß Anspruch 1, wobei der niedrigmolekulare Alkohol aus der Gruppe Methanol, Ethanol, Propanol, Isopropanol, oder einem Gemisch daraus ausgewählt ist.

**7.** Verfahren gemäß Anspruch 1, wobei das Abschreckungsbad bei etwa 15 bis 45°C gehalten wird.

**8.** Verfahren gemäß Anspruch 1, wobei die angereicherte Atmosphäre befeuchtete Luft, Stickstoff, Argon oder ein Gemisch daraus enthält.

**9.** Verfahren gemäß Anspruch 8, wobei die angereicherte Atmosphäre zirkulierengelassen wird.

**10.** Verfahren gemäß Anspruch 8, wobei die befeuchtete Luft aus Luft mit einer relativen Feuchtigkeit von etwa 20 bis 100% besteht.

**11.** Verfahren gemäß Anspruch 1, wobei die Spinndüse und das Abschreckbad um 0,1 bis 10 m, vorzugsweise 1 bis 3 m voneinander getrennt sind.

**12.** Verfahren gemäß Anspruch 1, wobei die hohle Faser nach dem Abschrecken gewaschen wird.

**13.** Verfahren gemäß Anspruch 1, wobei die Polymerisatlösung der Düse mit einer Geschwindigkeit von mindestens etwa 0,1 ml/min und einer Temperatur von etwa 5 bis 85°C zugeführt wird.

**14.** Verfahren gemäß Anspruch 1, wobei die ausfällende Lösung der Spinndüse mit einer Geschwindigkeit von mindestens etwa 0,1 ml/min und einer Temperatur von etwa -10 bis 85°C zugeführt wird.

**15.** Verfahren gemäß Anspruch 1, wobei die äußere ringförmige Austrittsöffnung der Spinndüse einen Außendurchmesser von etwa 0,015 bis 0,045 Zoll (0,381 bis 1,14 mm) und einen Innendurchmesser von etwa 0,005 bis 0,010 Zoll (0,127 bis 0,254 mm) aufweist.

**16.** Verfahren gemäß Anspruch 1, wobei das Rohr der Spinndüse einen Innendurchmesser von etwa 0,001 bis 0,010 Zoll (0,0254 bis 0,254 mm) aufweist.

**17.** Verfahren zur Herstellung von asymmetrischen, mikroporösen, hohlen Fasern gemäß Anspruch 1, wobei das Verfahren Fasern erzeugt, die Abziehgeschwindigkeiten von etwa 75 m/min oder darüber aushalten.

**18.** Verfahren gemäß Anspruch 17, wobei die asymmetrische, mikroporöse, hohle Faser aus einem Gemisch aus Polysulfon und Polyvinylpyrrolidon besteht.

**19.** Verfahren gemäß Anspruch 18, wobei das Polysulfon ein Polymerisat der Formel

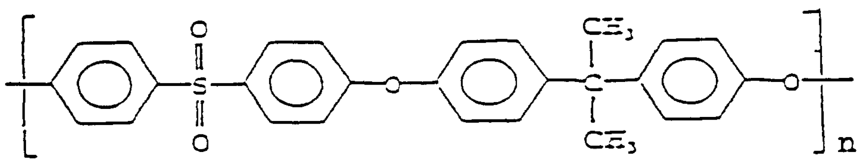

ist.

**20.** Verfahren gemäß Anspruch 19, wobei das Polysulfon aus der Gruppe der Polyethersulfone und Polyarylsulfone ausgewählt ist.

**Revendications**

**1.** Procédé amélioré pour la fabrication de fibres creuses microporeuses asymétriques, ce procédé consistant :

(a) à faire passer, à travers un orifice annulaire extérieur d'une filière de type tube dans l'orifice, une solution polymère comprenant environ 11 à 25 % en poids d'un polymère polysulfone hydrophobe et environ 0,1 à 5 % en poids d'un polymère polyvinylpyrrolidone dissous dans un solvant aprotique et ayant une viscosité d'environ 700 à 3500 cP pour former un liquide annulaire, dans lequel la filière de type tube dans l'orifice comporte un tube intérieur, ledit tube intérieur et ledit orifice annulaire extérieur ayant chacun une superficie de section telle que le rapport de la superficie de section de l'orifice annulaire extérieur à celle du tube intérieur est d'environ 5/1 ou davantage ;
(b) à faire passer simultanément, en un écoulement fluide laminaire, à travers le tube intérieur de la filière de type tube dans l'orifice, dans le centre du liquide annulaire, une solution de précipitation comprenant :

i) d'environ 30 à 90 % en poids d'un alcool ayant de 1 à 5 atomes de carbone ;
ii) d'environ 10 à 35 % en poids d'eau ; et
iii) d'environ 0 à 50 % en poids d'un solvant aprotique ;

(c) à faire passer, en un écoulement fluide laminaire, le liquide annulaire et la solution de précipitation au centre du liquide annulaire, selon un écoulement vertical de 0,1 à 10 mètres, dans l'atmosphère ou une atmosphère augmentée comprenant un mélange d'air et d'un gaz, un gaz inerte, ou leurs mélanges, la solution de précipitation interagissant avec la solution polymère à l'intérieur du liquide annulaire pour former un précipité polymère annulaire ;
(d) à faire subir une trempe au précipité polymère, dans un bain, pour former une fibre creuse, la filière et le bain de trempe étant séparés par une distance verticale de 0,1 à 10 mètres ; et
(e) à enrouler la fibre à une vitesse d'environ 90 à 150 % celle à laquelle la fibre est formée, la fibre étant produite à une vitesse d'au moins 30 m/min.

**2.** Procédé selon la revendication 1, dans lequel la polysulfone est un polymère de formule :

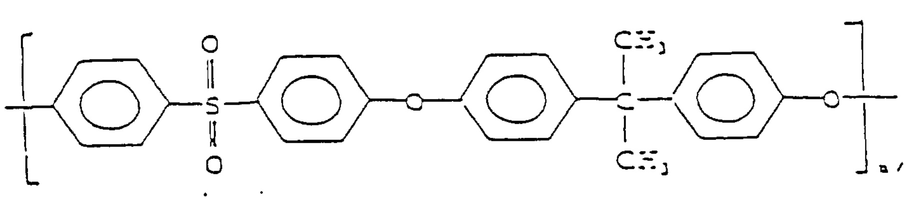

**3.** Procédé selon la revendication 1, dans lequel la polysulfone est choisie dans l'ensemble constitué par les polyéthersulfones et les polyarylsulfones.

4. Procédé selon la revendication 1, dans lequel le polymère polyvinylpyrrolidone a un indice K d'environ 80 à 93.

5. Procédé selon la revendication 1, dans lequel le solvant aprotique est choisi dans l'ensemble constitué par le diméthylformamide, le diméthylacétamide, le diméthylsulfoxyde, la N-méthylpyrrolidone et leurs mélanges.

6. Procédé selon la revendication 1, dans lequel l'alcool inférieur est choisi dans l'ensemble constitué par le méthanol, l'éthanol, le propanol, l'isopropanol et leurs mélanges.

7. Procédé selon la revendication 1, dans lequel le bain de trempe est maintenu à environ 15 à 45°C.

8. Procédé selon la revendication 1, dans lequel l'atmosphère augmentée est de l'air humidifié, de l'azote, de l'argon ou un de leurs mélanges.

9. Procédé selon la revendication 8, qui comprend la circulation de l'atmosphère augmentée.

10. Procédé selon la revendication 8, dans lequel l'air humidifié est de l'air avec une humidité relative de 20 à 100 %.

11. Procédé selon la revendication 1, dans lequel la filière et le bain de trempe sont séparés de 0,1 à 10 mètres et de préférence d'environ 1 à 3 mètres.

12. Procédé selon la revendication 1, qui comprend en outre le lavage de la fibre creuse après la trempe.

13. Procédé selon la revendication 1, dans lequel la solution polymère est amenée à la filière à une vitesse d'au moins environ 0,1 ml/min et à une température d'environ 5 à 85°C.

14. Procédé selon la revendication 1, dans lequel la solution de précipitation est amenée à la filière à une vitesse d'au moins 0,1 ml/min et à une température d'environ -10 à 85°C.

15. Procédé selon la revendication 1, dans lequel l'orifice annulaire extérieur de la filière a un diamètre extérieur d'environ 0,381 à 1,14 mm (0,015 à 0,045 pouce) et un diamètre intérieur d'environ 0,127 à 0,254 mm (0,005 à 0,010 pouce).

16. Procédé selon la revendication 1, dans lequel le tube de la filière a un diamètre intérieur d'environ 0,0254 à 0,254 mm (0,001 à 0,010 pouce).

17. Procédé pour fabriquer des fibres creuses microporeuses asymétriques selon la revendication 1, dans lequel ledit procédé produit des fibres capables de supporter des vitesses d'enroulement d'environ 75 m/min ou davantage.

18. Procédé selon la revendication 17, dans lequel les fibres creuses microporeuses asymétriques sont constituées d'un mélange de polysulfone et de polyvinylpyrrolidone.

19. Procédé selon la revendication 18, dans lequel la polysulfone est un polymère de formule :

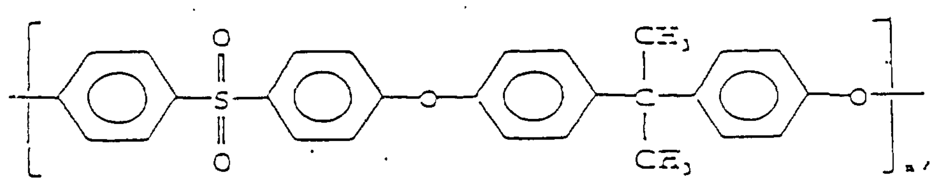

20. Procédé selon la revendication 18, dans lequel la polysulfone est choisie dans l'ensemble constitué par les polyéthersulfones et les polyarylsulfones.

FIG. 1

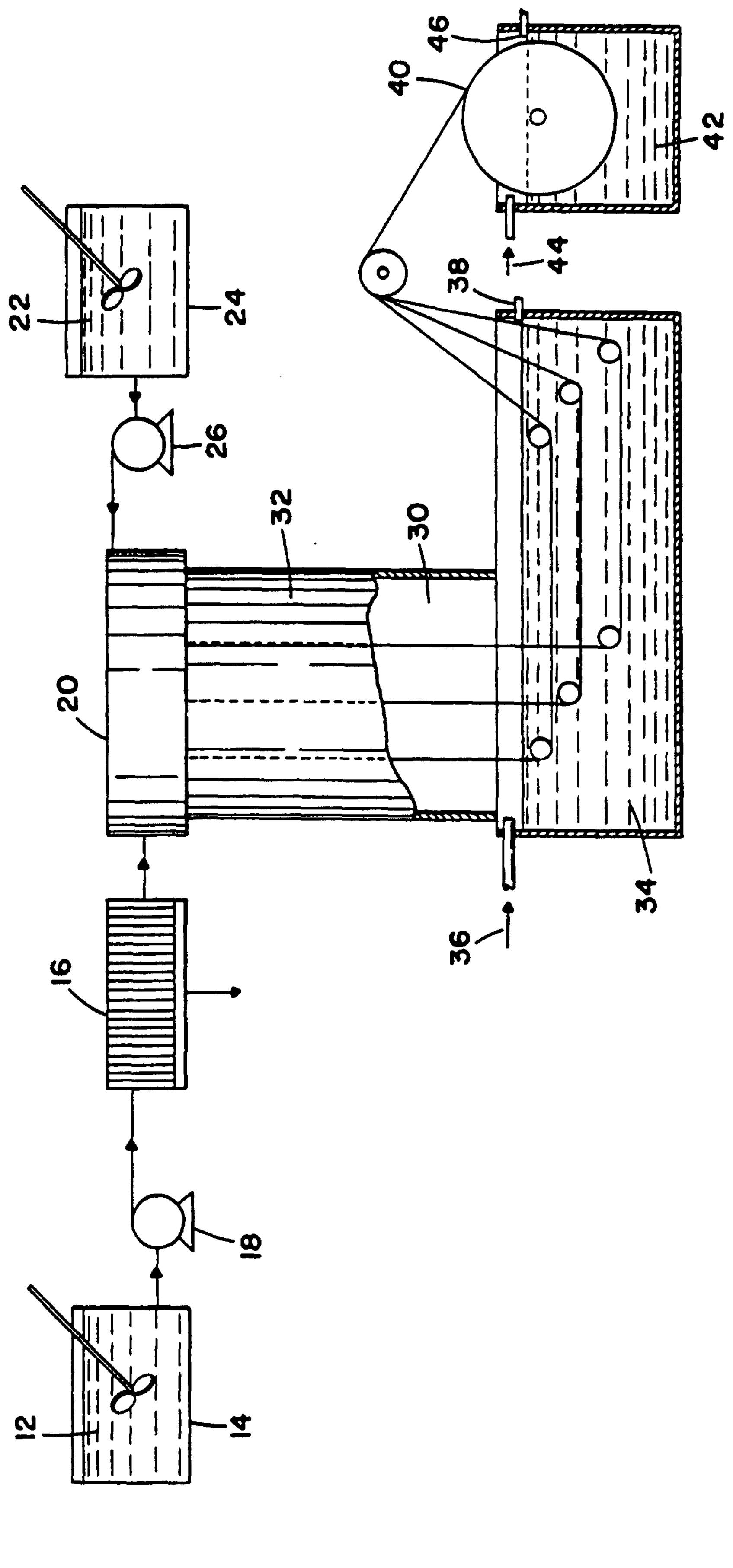

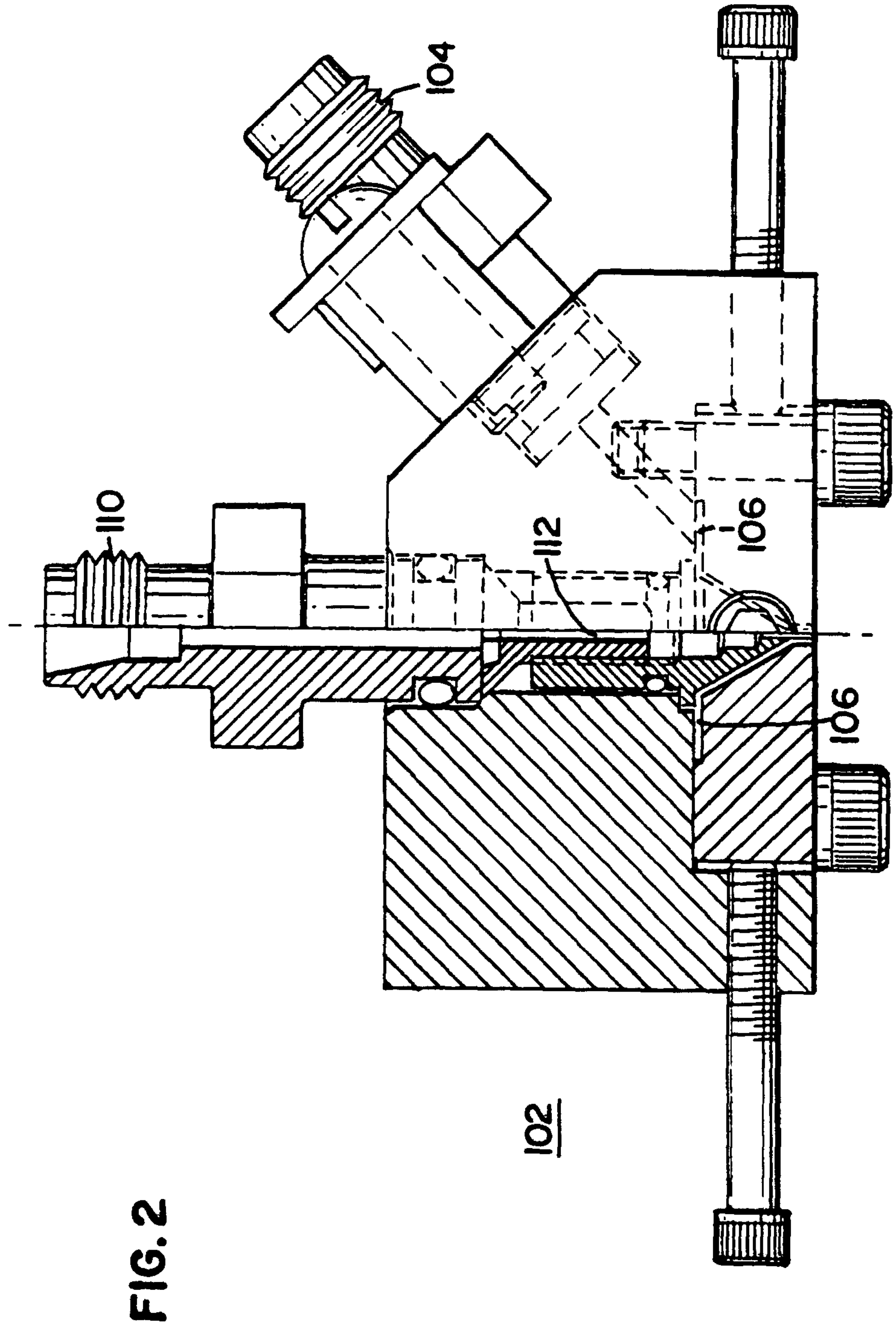


FIG. 2

FIG.3